# EUROPEAN PATENT SPECIFICATION

(11) **EP 1 887 265 B1**
(45) Date of publication and mention of the grant of the patent: **11.07.2012**
(21) Application number: 06745598.0
(22) Date of filing: 24.04.2006
(51) Int. Cl.: F16J 15/34

(54) **MECHANICAL SEAL DEVICE**
MECHANISCHE DICHTUNGSVORRICHTUNG
DISPOSITIF DE JOINT MÉCANIQUE

(30) Priority: 28.04.2005 JP 2005133371
(43) Date of publication of application: 13.02.2008
(73) Proprietor: Eagle Industry Co., Ltd., Tokyo 105-8587 (JP)
(72) Inventor: TAKAHASHI, Hidekazu, c/o Eagle Industry co. Ltd.,, Tokyo 1058587 (JP)
(74) Representative: Wiebusch, Manfred
(86) International application number: PCT/JP2006/308520
(87) International publication number: WO 2006/118069

(56) References cited:
- EP-A2- 1 231 419
- JP-A- 54 072 355
- JP-A- 59 115 432
- JP-A- 61 149 670
- JP-A- 2002 106 720
- JP-A- 2004 224 982
- JP-B1- 45 026 765
- US-A- 5 201 531
- US-A- 5 498 007

## Description

### TECHNICAL FIELD

The present invention relates generally to a contact, single type mechanical seal device for sealing a fluid , particularly a fluid on the periphery of a rotary shaft of a pump for feeding a gas, according to the preamble of claim 1 and as it is disclosed in JP345026765B.

### BACKGROUND ART

Conventional mechanical seal devices suffer from a leakage problem of a sealed fluid through the clearance gap formed at the periphery of the rotary shaft when providing a seal between parts of an apparatus using a chemical fluid, natural gas, hydrogen or the like, e.g., sealing a sealed fluid (operating fluid) which is present around the rotary shaft of a feeding apparatus of an automobile which feeds a combustion gas to the tank, a chemical apparatus or the like. The mechanical seal device further requires a complex construction for sealing the sealed fluid of evaporated gas within the apparatus. This creates another problem of increasing cost of the mechanical seal device. Moreover, in case of providing a seal to a sealed fluid such as chemical liquid, the mechanical seal device could be put in a danger that slide friction heat generated at the slide seal faces of seal rings thereof due to the reaction of the chemical fluid may cause an inflammation of the chemical fluid. In addition, there is a danger of malfunction of a combustion apparatus that impurities such as a lubricant or the like may get into the operating fluid (combustion gas). In recent years, the foresaid technical background has necessitated prevention of friction heat at the slide seal faces, improvement over the impurities getting into the sealed fluid through the seal faces as well as a structural simplification of the mechanical seal device.

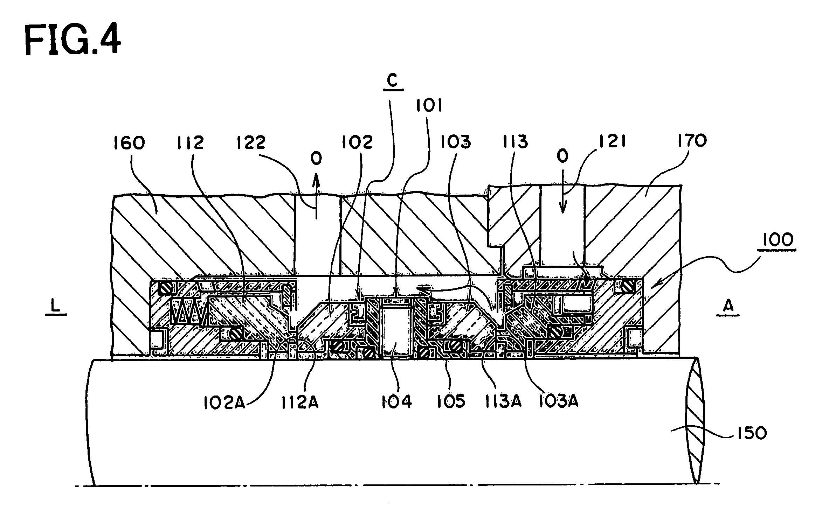

Related prior art of the present invention is found as a mechanical seal device whose construction is shown in FIG. 4. The mechanical seal device 100 shown in FIG. 4 is a so-called double type seal which is available in a variety of forms, which basically share a construction of a couple of stationary seal rings 112, 113 opposing each other while a rotary seal device 101 being sandwiched therebetween (refer to patent reference 1, patent reference 2 or patent reference 3 listed below). The mechanical seal device given in FIG. 4 is now described. The entire seal housing structure is split to one seal housing 160 and the other seal housing 170 so as to allow the mechanical seal device 100 be assembled therewithin. In the rotary seal device 101, a first rotary seal ring 102 and a second rotary seal ring 103 are configured in such a manner that hind surfaces thereof oppose against respective side walls of a stationary ring 105 which is fixed against the rotary shaft 150 by means of a set screw 104. A first stationary seal ring 112 is retained by the one seal housing 160 while a second stationary seal ring 113 is by the other seal housing 170. Then a first seal face 102A of the first rotary seal ring 102 comes to a seal contact with a second seal face 112A of the first stationary seal ring 112 while a third seal face 103A of the second rotary seal ring 103 comes to a seal contact with a fourth seal face 113A of the second stationary seal ring 113.

The mechanical seal device 100 thus constructed is disposed within a chamber defined by the entire seal housing construction and forms a sealed fluid chamber C in the outer circumference of the rotary seal device 101. This sealed fluid chamber C allows the circulation of a lubrication fluid O which is supplied from a first passageway 121 by means of a pump, not shown, and discharged from a second passageway 122. This sealed fluid chamber C is filled with the lubrication fluid O supplied, for example a liquid lubricant. And a sealing contact formed between the first seal face 102A and the second seal face 112A separates the sealed fluid chamber C from the operating fluid chamber L. Likewise, a sealing contact formed between the third seal face 103A and the fourth seal face 113A separates the sealed fluid chamber C from the atmospheric side A.

In such a mechanical seal device 100, whether the sealed fluid chamber C may be pressurized higher or lower than the operating fluid chamber L, there is a possibility of leaking between the slide surfaces of the first seal face 102A and the second seal face 112A to the operating fluid chamber L side. When the lubrication fluid O leaks to the operating fluid chamber L, the performance as operating fluid may deteriorate. For example, in case of the lubrication fluid O getting into a combustion gas which is an operating fluid of automobile or the like, the lubricant burns together when the combustion gas burns, which causes a problem that burnt foreign matter is deposited in the operating fluid chamber L. Providing the sealed fluid chamber C with an operating fluid which is non-flammable and of the same type as the operating fluid of the operating fluid chamber L in order to circumvent the foresaid problem, will solve the combustion problem as well as the mixing problem because it is now the same fluid as the operating fluid of the operating fluid chamber L. However, it may lose a lubrication effect on the slide surfaces of the first seal face 102A and the second seal face 112A, which will in turn induce generation of frictional heat. If a malfunction or some sort further increases the frictional heat to an unexpected high temperature, a volatile operating fluid may catch fire. Also the operating fluid within the sealed fluid chamber C may leak out to the atmospheric side A from the slide surfaces of the third seal face 103A and the fourth seal face 113A. Leakage of the operating fluid to the atmospheric side A may cause an environmental damage, especially in case of combustion gas. As indicated in the patent reference 1 or patent reference 2 given below, having dynamic pressure inducing grooves decreases generation of frictional heat due to the non-contact state of the seal faces formed thereby. The operating fluid or lubrication fluid O, however, may leak to the other side from the interface of the seal faces.

Patent reference 1: Japanese Patent 2954125 Publication
Patent reference 2: Japanese Patent 3066367 Publication
Patent reference 3: US. Patent 5213340, Description

### DISCLOSURE OF THE INVENTION

### TECHNICAL PROBLEMS TO BE SOLVED BY THE INVENTION

The present invention is proposed for alleviating the above mentioned disadvantages, and the technical problem to be solved by the invention is to prevent a chemical fluid as a sealed fluid from leaking to a device outboard section through a fit engagement gap between the seal housing and the rotary shaft. Another technical problem, at the same time, is to prevent a different fluid from mixing with the sealed fluid. Yet another problem is to prevent the sealed fluid from being inflamed by slide friction heat in the sliding seal faces. Yet another problem is to reduce cost of the mechanical seal device by simplifying construction thereof.

### MEANS FOR SOLVING THE TECHNICAL PROBLEMS

A primary object of the present invention is to solve the above mentioned technical problems, and a solution to such problems is embodied as follows.

A mechanical seal device of the present invention is a mechanical seal device for sealing an operating fluid at a clearance gap formed between a seal housing and a rotary shaft. The mechanical seal device is comprised of a stationary seal ring which is attached to a seal cover of the seal housing in a sealing relation and has a seal face, a rotary seal ring which has an opposed seal face wherein the opposed seal face is able to oppose to the seal face in a sealing contact relation, a fixed portion which retains the rotary seal ring in a sealing relation and is retained by the rotary shaft in a sealing relation and rotates with the rotary shaft in an integral relation, a seal member which is disposed to a device outboard section side away from the seal-tight contact surfaces of the seal face and the opposed seal face and provides a seal between the seal cover and the rotary shaft, a fluid chamber which reserves the lubricant formed between the seal-tight contact surfaces of the seal face and the opposed seal face and the seal member, and a supply port which supplies the lubricant to the fluid chamber, characterized in that a lubrication region surface is disposed in the fluid chamber side of the seal face or the opposed seal face, wherein a self-lubrication region surface is disposed in the device inboard section side, wherein an introduction port is disposed in the lubrication region surface for inducting the lubricant, wherein stopper grooves in an annular form are disposed in the self-lubrication region surface, wherein the stopper grooves stop the lubricant from the lubrication region surface.

### EFFECTS OF THE INVENTION

In the mechanical seal device of the present invention, a seal face of either rotary seal ring or stationary seal ring disposes a lubrication region surface and a self-lubrication region surface therein, retains introduction ports in the lubrication region surface so as to induct the lubricant thereinto, and retains stopper grooves in the self-lubrication region surface for stopping the lubricant thereat. Therefore, sliding faces of the seal face and the opposed seal face can be lubricated with the lubricant inducted from the introduction port, and the lubricant provides a seal so as to prevent the operating fluid from leaking to the device outboard section side. Furthermore the actions of the stopper groove and the seal face effectively prevent the lubricant from leaking from the seal faces into the device inboard section side and mixing with the operating fluid. Also the lubricant trapped in the stopper groove effectively prevents the operating fluid from leaking. In addition, as the stationary seal ring is securely retained by the seal cover while the rotary seal ring is securely retained in the rotary shaft side, it is advantageous that construction thereof is made simple and assembly thereof is also made straightforward.

### BRIEF DESCRIPTION OF THE DRAWINGS

[FIG. 1] FIG. 1 is a cross sectional view of one half portion of a mechanical seal device as a first embodiment related to the present invention.
[FIG. 2] FIG. 2 is a front view of the rotary seal ring shown in FIG. 1.
[FIG. 3] FIG. 3 is a cross sectional view of a portion of the rotary seal ring as other embodiment shown in FIG. 1.
[FIG. 4] FIG. 4 is a cross sectional view of one half portion of a mechanical seal device as a prior art of the present invention.

### DESCRIPTION OF REFERENCE NUMERALS

- 1: mechanical seal device
- 3: rotary seal ring
- 3A: inner circumferential surface
- 4: opposed seal face
- 4A: self-lubrication region surface
- 4B: lubrication region surface
- 5A: stopper groove
- 5A1: first stopper groove
- 5A2: second stopper groove
- 5B: introduction port
- 10: fixed portion
- 10A: first fixed ring
- 10B: bellows
- 10C: engagement surface
- 10D: second fixed ring
- 10N: female thread
- 11: set screw
- 20: stationary seal ring
- 20A: pin insertion bore
- 20B: fit surface
- 20C: passageway surface
- 24: seal face
- 30: sleeve
- 30A: outer circumferential surface
- 31: nut
- 45: seal element (oil seal)
- 60: seal housing
- 70: seal cover
- 75: supply port
- A: device outboard section
- C: passageway
- D: fluid chamber
- L: device inboard section

### BEST MODE FOR CARRYING OUT THE INVENTION

Described below is the details of the figures of a preferred embodiment in accordance with the principles of the present invention. All the figures explained below are constructed according to actual design drawings with accurate dimensional relations.

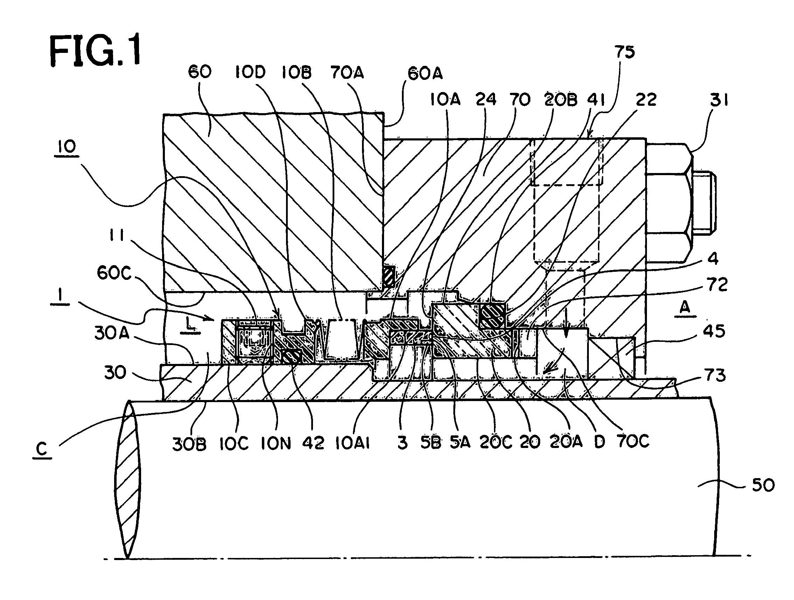

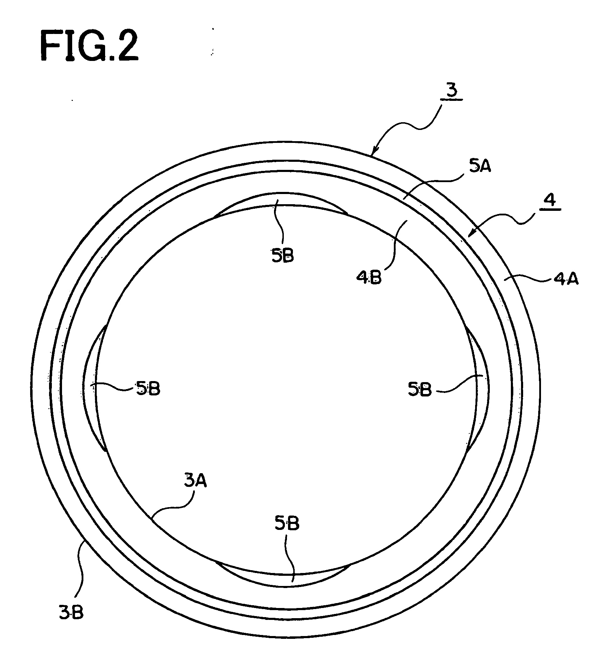

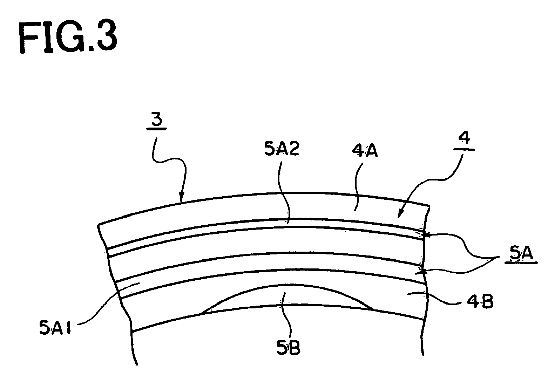

FIG. 1 depicts a cross sectional view of one half portion of a mechanical seal device 1 of a cartridge type being installed between a seal housing 60 and a rotary shaft 50 in order to seal the sealed fluid. FIG. 2 is a front view of a rotary seal ring 3 disposed in the mechanical seal device 1 shown in FIG. 1. Moreover FIG. 3 is a front view of a portion of a rotary seal ring 3 as other embodiment disposed in the mechanical seal device 1 shown in FIG. 1.

FIG. 1 shows a mechanical seal device 1 as a first embodiment relative to the present invention. There is disposed a rotary shaft 50 extending through a shaft bore which is formed within an inner circumferential surface 60C of the seal housing 60. The mechanical seal device 1 is mounted between the inner circumferential surface 70C of a seal cover 70 and the outer circumferential surface 30A of a sleeve 30 which is attached onto the rotary shaft 50. This seal housing 60 retains four pieces of stud bolts in the outboard end surface 60A and nuts 31 thread the stud bolts. Also the rotary shaft 50 mounted in the bore of the seal housing 60 is supported in freely rotatable a manner by means of bearings, not shown. Inside the bore of the seal housing 60 defines a device inboard L while outboard side of the seal cover 70 of the mechanical seal device 1 defines a device outboard A. The seal cover 70 is a separated member to the seal housing 60 so as to install the mechanical seal device therewithin. However, it can be built integrally to the seal housing 60 if the mechanical seal device 1 can be disposed therewithin.

Further details on the mechanical seal device 1 will be given below by referring to FIG. 1 and FIG. 2. The seal cover 70 mounted onto the seal housing 60 has a square or circular design in outer perimeter surface thereof. The seal cover 70 has U-shaped fixture grooves, not shown, which have four equally spaced open ends in radially outward directions. The fixture grooves of the seal cover 70 receive stud bolts therein and fastening nuts 31 on the stud bolts securely presses the mount surface 70A of the seal cover 70 against the outboard end surface 60A of the seal housing 60. The seal cover 70 also forms an inner bore hole within the inner circumferential surface 70C which has a common axis to the shaft bore hole of the seal housing 60.

Device outboard A side of the inner circumferential surface 70C defines a fit engagement surface 73 for mounting a seal element 45. This fit engagement surface 73 receives the seal element 45 which sealingly contains the lubrication fluid. This seal element 45, for instance, should preferably be an oil seal. The inner circumferential surface 70C of the seal cover 70 disposes a step shoulder surface to the device inboard L side of the seal element 45 which is for fittingly mating the fit surface 20B of the stationary seal ring 20. In addition, there is disposed a supply port 75 in the seal cover 70 in the mid point between the stationary seal ring 20 and the seal element 45 which communicates the external to the fluid chamber D. This supply port 75 enables the lubrication fluid to be fed to the fluid chamber D within the inner circumferential surface 70C by means of a tank, not shown (lubrication fluid only needs to be accumulated in the tank as there is no need of pressure feed by means of a pump). Instead of having a tank, the lubrication fluid can be accumulated within the fluid chamber D. The inner circumferential surface 70C retains a plurality of fixture pins 72 in equally spaced a manner along the circumference near the hind wall of the stationary seal ring 20.

A joint surface 22 is formed in the fit surface 20B of the stationary seal ring 20 fitting the aforementioned inner circumferential surface 70C of the seal cover 70. The joint surface 22 defines a cavity portion for receiving an O-ring 41 between itself and the step shoulder surface of the inner circumferential surface 70C. Front end surface of the stationary seal ring 20 to the device inboard L side defines a seal face 24. On the opposite side of the seal face 24, the stationary seal ring 20 disposes U-shaped pin insertion bore 20A along the circumferential surface which respectively engage a plurality of the fixture pins 72. The inner circumference of the stationary seal ring 20 also defines a passageway surface 20C. The inner circumferential side of the passageway surface 20C in conjunction with the outer circumferential surface 30A of the sleeve 30 defines a portion of fluid chamber D for lubricant as well. This stationary seal ring 20 is made of a material such as silicon carbide, super hard steel, ceramics or the like.

FIG. 2 is a front view of the rotary seal ring 3 shown in FIG. 1. The rotary seal ring 3 will be explained below by referring to FIG. 2 as well. The rotary seal ring 3 has a cylindrical form. Material of this rotary seal ring 3 is high strength dense carbon (NC-6Mi), that is, non-impregnated carbon. The rotary seal ring 3 disposes an opposed seal face 4 at the front end as shown in FIG. 2. The high strength dense carbon material used for the rotary seal ring 3 is free of porosity or tiny crack-like grooves which are formed in the carbon molding process, thus preventing the sealed fluid leaking through the porosity, grooves or the like toward the operating fluid side (radially outward). On the lubrication region surface 4B in the inner circumferential side of he opposed seal face 4 of the rotary seal ring 3, there should preferably be disposed a plurality of lubricant introduction ports 5B along the circumferential surface which are of a circular arc design as shown in FIG. 2. The introduction ports 5B do not need to be in a circular arc design, but rectangular groove, spiral groove, S-shaped groove, U-shaped port or the like may alternatively be formed in the lubrication region surface 4B as long as a lubricant can be provided to the lubrication region surface 4B. On self-lubrication region surface 4A in the outer circumference side of the rotary seal ring 3, there is disposed a lubricant stopper groove 5A of an annular form. This groove width of the stopper groove 5A depends on the size of the rotary seal ring 3 but should preferably be in the range of from 1.5mm to 2.5mm. Depth of the groove also should preferably be in the range of from 0.5mm to 1.5mm. And the lubricant flows into the fluid chamber D which is defined by the inner circumferential surface 3A of the rotary seal ring 3 and the outer circumferential surface 30A of the sleeve 30. The lubricant provided from the supply port 5 is accumulated under a low pressure like the atmospheric or quasi-atmospheric pressure.

The inner circumferential surface 30B of the sleeve 30 comes to a fit engagement with the outer circumferential surface of the rotary shaft 50. This sleeve 30 is fixed at fixture portion thereof, not shown, against the rotary shaft 50 by means of a set screw. This sleeve 30 forms a step shoulder surface on the outer circumferential surface 30A, defining a large diameter portion and a small diameter portion. Between the outer circumferential surface 30A of the sleeve 30 and inner surface 60C of the seal housing 60 there is formed an operating fluid passageway C which communicates with the device inboard section L. The sleeve 30 is made of a material such as stainless steel, brass, ferrum or the like.

Back portion of the rotary seal ring 3 opposite the opposed seal face 4 fittingly joins the step shouldered fixing surface 10A1 of the first fixed ring 10A. The first fixed ring 10A is disposed at the free end portion of the fixed portion 10 which retains the rotary seal ring 3 toward the rotary shaft 50 side. On the opposite side of the first fixed ring 10A in the fixed portion 10 is disposed a second fixed ring 10D. The first fixed ring 10A and the second fixed ring 10D are sealingly connected with each other by means of bellows 10B being made of metal. This bellows 10B has a wave-form cross-section and a resilient spring force of the bellows resiliently urges the rotary seal ring 3 to the stationary seal ring 20. The inner circumferential engagement surface 10C of the second fixed ring 10D fittingly engages the outer circumferential surface 30A of the sleeve 30. A seal between the engagement surface 10C and the sleeve 30 is provided by O-ring 42. Furthermore, the second fixed ring 10D disposes a female thread 10N which radially runs through between inner and outer diameter surfaces. A set screw 11 fastens this female thread 10N for fixing the second fixed ring 10D to the sleeve 30. The fixed portion 10 is made of material such as stainless steel, brass or the like. The O-rings 41, 42 are made of rubber-like elastic resin or rubber material with chemical liquid resistivity, for example, Nitrile Rubber (NBR), Hydrogenated Nitrile Rubber (HNBR), Polytetrafluoroethylene (PTFE), Fluoride Rubber (FKM) or the like.

FIG. 3 shows other embodiment pf the rotary seal ring 3. A plurality of stopper grooves 5A in annular form are disposed on the self-lubrication region 4A of the rotary seal ring 3. The stopper grooves 5A consist of first stopper groove 5A1 and second stopper groove 5A2. Width of the second stopper groove 5A2 then should preferably be narrower than that of the first stopper groove 5A1. The first stopper groove 5A1 and the second stopper groove 5A2 can be arranged to have more than three in a ring form such as third and fourth stopper grooves. Dimension of groove width of the first stopper groove 5A1 depends on the size of the rotary seal ring 3, but should preferably be in the range of from 1mm to 2mm. And depth dimension of the first stopper groove 5A1 should preferably be in the range of from 0.5mm to 1.5mm. Width dimension of the second stopper groove 5A2 also depends on the size of the rotary seal ring 3, preferably be in the range of from 0.5mm to 1mm. And depth dimension of the second stopper groove 5A2 should preferably be in the range of from 0.3mm to 1.5mm.

The rotary seal ring 3 disposed in the fixed portion 10 can be resiliently urged by means of a coiled spring, not shown, instead of being urged by the bellows 10B In this case, the first fixed ring 10A should form a fit engagement with the sleeve 30 in a freely slidable relation while the fit clearance should be sealed by O-ring or the like.

This mechanical seal device 1 is meant to secure respective members as described below after engaging the sleeve 30 with the rotary shaft 50. Namely, O-ring 42 is installed in the O-ring groove of the second fixed ring 10D, and the second fixed ring 10D fittingly engages the outer circumferential surface 30A of the sleeve 30. The sleeve 30 is then secured against the rotary shaft 50 by means of a set screw 11. Assembling as described installs the fixed portion 10 disposed with the rotary seal ring 3 to the sleeve 30. The stationary seal ring 20, on the other hand, fittingly engages the step shoulder surface in the inner circumferential surface 70C of the seal cover 70 after fitting the O-ring 41 to the joint surface 22. In doing so, inserting the fixture pins 72 in the pin insertion bore 20A secures the stationary seal ring 20 so as not to rotate together during the relative rotation of the rotary seal ring 3. And the seal cover 70 is assembled to the outer end surface 60A of the seal housing 60 via nut 31. The seal face 24 of the stationary seal ring 20 and the opposed seal face 4 of the rotary seal ring 3 form a seal-tight contact accordingly. As a result, not only that leakage of the operating fluid to the atmospheric region is prevented from causing pollution but also that the lubricant is effectively prevented from getting into the operating fluid and causing malfunction during the operation.

The passageway C is filled with operating fluid (sealed fluid). Then the lubricant is supplied from the supply port 75 into the fluid chamber D. Atmospheric pressure can be used as the lubricant is aimed for a lubrication effect. Therefore, unlike in conventional techniques, there is no need to pressure-feed the lubricant, which omits the necessity of having a feed facility such as a pump or the like for pressure-feeding the lubricant. Therefore a facility cost of the feed facility can be reduced. Furthermore, in case of pressure-feeding the lubricant in a conventional manner, pressure control or flow control of the lubricant becomes necessary in conjunction with the seal faces. The present invention, however, does not require a pressure monitoring and the running cost can significantly be reduced. The operating fluid inside the passageway C, on the other hand, is for process use and kept under a higher pressure than the lubricant in the fluid chamber D which is meant for lubrication purpose alone.

For example, in case of CNG booster compressor which supplies natural gas or hydrogen fuel to an automobile, since the fuel pressure becomes about 10kg/cm.sup.2, the operating fluid (sealed fluid) as a fuel needs to be prevented from leaking outside and causing pollution. With a conventional non-contact type mechanical seal device which disposes dynamic pressure slits on seal face thereof and tolerates leakage of the sealed fluid to some extent, it is impossible to securely seal the high-pressure operating fluid. However, with the contact-type mechanical seal device 1 of the present invention, as the opposing respective seal faces 4, 24 are always kept in contact relation, it is possible to securely seal the sealed fluid (operating fluid). A problem seen in the contact type mechanical seal device 1 which is caused by a particular chemical operating fluid can be solved, for instance, by combination of introduction port 5B and stopper groove 5A which are disposed on the seal face 4 of the rotary seal ring 3. Furthermore, since the self-lubrication region surface 4A is the surface which exhibits a self-lubricating function under a sliding motion and also is disposed with the stopper groove 5A, it can prevent the lubricant from leaking and mixing with the operating fluid in the device inboard section L. Therefore an occurrence of an engine malfunction can be prevented as the result of prevention of a mixing of the lubricant with natural gas or hydrogen and a formation of carbide due to combustion of the lubricant with natural gas or hydrogen.

The mechanical seal device 1 constructed as described above operates as follows. Lubricant supplied from the supply port 75 fills the fluid chamber D. Pressure of the lubricant in the fluid chamber D is arranged lower than the pressure of the operating fluid in the passageway C. The low pressure of the lubricant may be an atmospheric pressure. And the lubricant remains on the lubrication region surface 4B between the seal face 24 and the opposed seal face 4 for providing lubrication to the sliding surfaces in order to prevent friction and abrasion of the sliding surfaces. The lubricant staying between the seal face 24 and the opposed seal face 4 comes in via fluid chamber D from the introduction port 5B which is disposed in the opposed seal face 4. In addition, when the seal face 24 and the opposed seal face 4 undergo a relative rotation, a lubricant is sucked in between the two sliding surfaces, being inducted from the introduction port 5B into the lubrication region surface 4B. This lubricant prevents heat generation at the sliding surfaces by providing lubrication to the seal face 24 and the opposed seal face 4. The lubricant, however, is stopped from leaking along the lubrication region surface 4B into the self-lubrication region surface 4A during the rotation of the seal face 24 and the opposed seal face 4 by means of stopper grooves 5A (5A1, 5A2) which are disposed on the self-lubrication region surface 4A. And as the self-lubrication region surface 4A exhibits a self-lubrication function owing to high-strength dense carbon (NC-6Mi) regardless of absence of lubricant, induction of heat generation under a sliding movement is prevented. Therefore, occurrence of a blistering phenomenon in which a sliding heat carbonizes and solidifies the lubricant oil and the like remaining on the self-lubrication region surface 4A and the carbide formed rips off the respective seal faces 4, 24, can effectively be prevented.

The pressure of the lubricant in the fluid chamber D being lower than the pressure of the operating fluid and stopper groove 5A (5A1, 5A2) disposed can securely prevent induction of impurities. And when the lubricant is trapped in the stopper groove 5A (5A1, 5A2) of the self-lubrication region surface 4A, a multiplicative effect of the lubricant and the stopper groove 5A (5A1, 5A2) not only prevents the operating fluid from leaking out to the device outboard section A but also prevents the lubricant from leaking into the device inboard section L. Furthermore, as the counterpart self-lubrication region surface 4A enjoys a self-lubrication ability, occurrence of generation of sliding frictional heat at the respective seal faces 4, 24 as well as friction and wear under a sliding motion relative to the seal face 4 can be prevented. Therefore solidifying of chemical liquid on the seal faces 4, 24 due to frictional heat generation and giving damage to the seal faces 4, 24 are effectively prevented. The above described introduction port 5B and the stopper groove 5A disposed in the rotary seal ring 3 can be disposed instead in the seal face 4 of the stationary seal ring 20, which achieves a similar effect when having a relative sliding motion to the rotary seal ring 3.

Construction and operational effect of a mechanical seal device as other embodiment related to the present invention will be described below.

In a mechanical seal device of the first invention relative to the present invention, the rotary seal ring or the stationary seal ring is made of high-strength dense carbon.

According to the mechanical seal device of the first invention, as the rotary seal ring or the stationary seal ring is made of high-strength dense carbon, the self-lubrication region is capable of self-lubricating under a sliding motion and effectively preventing a frictional heat generation despite the absence of a lubricant on the self-lubrication region. Therefore it is possible to prevent frictional heat from igniting the operating fluid for catching fire. In addition, since there is only a small amount of lubricant needed, management of the lubricant is made easier and a facility cost and running cost of the feeding facility to supply the lubricant can be reduced.

In a mechanical seal device of the second invention relative to the present invention, pressure of the lubricant in the fluid chamber is kept lower than the pressure of operating fluid.

According to the mechanical seal device of the second invention, as the pressure of the lubricant in the fluid chamber is kept lower than the pressure of operating fluid, it effectively prevents the fluid pressure from forcing the lubricant to leak to the device inboard. The lubricant also can be reserved in the fluid chamber by means of self-weight pressure and does not require a pump or the like for feeding the lubricant, thereby reducing the feeding facility cost. It also does not require pressure or flow control of the lubricant, thereby simplifying management thereof and reducing running cost thereof.

In a mechanical seal device of the third invention relative to the present invention, the lubricant in the fluid chamber is kept under atmospheric pressure.

According to the mechanical seal device of the third invention, as the lubricant in the fluid chamber is kept under atmospheric pressure, reserving the lubricant in the fluid chamber alone enables lubrication of the seal faces. Therefore a feeding facility cost for supplying the lubricant can be reduced.

In a mechanical seal device of the fourth invention relative to the present invention, the fixed portion disposes a bellows which exerts a resilient urging force to the rotary seal ring and provides a seal at the joint portion with the rotary seal ring, and the fixed portion is secured to a sleeve which securely engages a rotary shaft.

According to the mechanical seal device of the fourth invention, as the fixed portion disposing the bellows is secured to the sleeve which the fixed portion disposing the bellows is secured to the sleeve which securely engages the rotary shaft, the mechanical seal device can be installed simply by joining the seal cover with the seal housing and securely engaging the sleeve with the rotary shaft. At the same time it also prevents a chemical liquid from causing a malfunction of the resilient urging means such as a spring disposed in the mechanical seal device. It also brings a merit of simplifying stock management and assembly of the mechanical seal device. Furthermore, for storage purpose the stationary seal ring is attached to the seal cover while the rotary seal ring is fittingly engaged with the sleeve, thus the seal face and the opposed seal face in storage being protected from damaging.

### INDUSTRIAL APPLICABILITY

As described so far a mechanical seal device of the present invention is advantageous in that the mechanical seal device prevents impurities in the fluid chamber from mixing with the operating fluid like a chemical liquid in process and that the chemical liquid is prevented from leaking to device outboard section and causing a pollution. The mechanical seal device is also advantageous in that fabrication cost and running cost thereof is reduced.

## Claims

1. A mechanical seal device for sealing an operating fluid at a clearance gap formed between a seal housing and a rotary shaft, said mechanical seal device comprising:
a) a stationary seal ring (20) attached to a seal cover (70) of said seal housing (60) in a sealing relation and having a seal face (24);
b) a rotary seal ring (3) having an opposed seal face (4), said opposed seal face being able to oppose to said seal face in a sealing contact relation;
c) a fixed portion (10) retaining said rotary seal ring in a sealing relation and being retained by said rotary shaft in a sealing relation and rotating with said rotary shaft in an integral relation;
d) a seal member (45) being disposed to a device outboard section side away from the seal-tight contact surfaces of said seal face and said opposed seal face and providing a seal between said seal cover and said rotary shaft; shaft;
e) a fluid chamber (D) reserving the lubricant formed between the seal-tight contact surfaces of said seal face and said opposed seal face and said seal member ;and
f) a supply port (75) supplying said lubricant to said fluid chamber,
**characterized in that** a lubrication region surface (4B) is disposed in the fluid chamber side of said seal face or said opposed seal face, a self-lubrication region surface (4A) is disposed in said device inboard section (L) introduction port (5B) is disposed in said lubrication region surface (4B) for inducting said lubricant, stopper groove (5A) in an annular form are disposed in said self-lubrication region surface (4A) and said stopper grooves (5A) stop said lubricant from said lubrication region surface (4B).

2. A mechanical seal device as claimed in claim 1 wherein said rotary seal ring or said stationary seal ring is made of high-strength dense carbon.

3. A mechanical seal device as claimed in claim 1 wherein pressure of said lubricant in said fluid chamber is kept lower than pressure in said device inboard section.

4. A mechanical seal device as claimed in claim 2 wherein pressure of said lubricant in said fluid chamber is kept lower than pressure in said device inboard section.

5. A mechanical seal device as claimed in claim 1 wherein pressure of said lubricant in said fluid chamber is kept under atmospheric pressure.

6. A mechanical seal device as claimed in claim 2 wherein pressure of said lubricant in said fluid chamber is kept under atmospheric pressure.

7. A mechanical seal device as claimed in claim 1 wherein said fixed portion disposes a bellows which resiliently urges said rotary seal ring and provides a seal for the joint section with said rotary seal ring, wherein said fixed portion is securely retained by a sleeve which is in a fit engagement with said rotary shaft.

8. A mechanical seal device as claimed in claim 2 wherein said fixed portion disposes a bellows which resiliently urges said rotary seal ring and provides a seal for the joint section with said rotary seal ring, wherein said fixed portion is securely retained by a sleeve which is in a fit engagement with said rotary shaft.

## Patentansprüche

1. Mechanische Dichtungsvorrichtung zur Abdichtung eines Spaltes zwischen einem Dichtungsgehäuse und einer drehbaren Welle gegen ein Arbeitsfluid, welche mechanische Dichtungsvorrichtung aufweist:
a) einen stationären Dichtring (20), der abdichtend an einem Dichtungsdeckel (70) des genannten Dichtungsgehäuses (60) angebracht ist und eine Dichtfläche (24) aufweist;
b) einem drehbaren Dichtring (3), der eine Gegendichtfläche (4) aufweist, wobei die Gegendichtfläche in der Lage ist, mit der genannten Dichtfläche in Dichtberührung zu treten;
c) einem festen Teil (10), der den drehbaren Dichtring in einer dichtenden Beziehung hält und durch die genannte drehbare Welle in einer dichtenden Beziehung gehalten ist und sich in einer einstückigen Beziehung mit der drehbaren Welle dreht;
d) einem Dichtungselement (45), das auf einer Geräteaußenseite entfernt von den dichtenden Kontaktflächen der genannten Dichtfläche und der genannten Gegendichtfläche angeordnet ist und eine Dichtung zwischen dem Dichtungsdeckel und der drehbaren Welle bildet;
e) einer Fluidkammer (D), die das Schmiermittel speichert und zwischen den dichtenden Kontaktflächen der genannten Dichtfläche und der genannten Gegendichtfläche und dem Dichtungselement gebildet ist; und
f) einem Einlass (75), der das genannte Schmiermittel zu der genannten Fluidkammer zuführt,
**dadurch gekennzeichnet, dass** eine Oberfläche (4B) eines Schmierungsgebietes auf der Seite der Fluidkammer der genannten Dichtfläche oder der genannten Gegendichtfläche angeordnet ist, eine Oberfläche (4A) eines selbstschmierenden Gebietes auf der genannten Geräteinnenseite (L) angeordnet ist und ein Zufuhrport (5B) in der genannten Oberfläche (4B) des Schmierungsgebietes angeordnet ist, um das genannte Schmiermittel zuzuführen, Begrenzungsnuten (5A) in einer ringförmigen Gestalt in der genannten Oberfläche (4A) des selbstschmierenden Gebietes angeordnet sind und die Begrenzungsnuten (5A) das genannte Schmiermittel von der genannten Oberfläche (4B) des Selbstschmierungsgebietes halten.

2. Mechanische Dichtungsvorrichtung nach Anspruch 1, bei der der drehbare Dichtring oder der stationäre Dichtring aus hochfestem dichtem Kohlenstoff hergestellt ist.

3. Mechanische Dichtungsvorrichtung nach Anspruch 1, bei der der Druck des genannten Schmiermittels in der genannten Fluidkammer niedriger gehalten wird als der Druck auf der genannten Geräteinnenseite.

4. Mechanische Dichtungsvorrichtung nach Anspruch 2, bei der der Druck des genannten Schmiermittels in der genannten Fluidkammer niedriger gehalten wird als der Druck auf der genannten Geräteinnenseite.

5. Mechanische Dichtungsvorrichtung nach Anspruch 1, bei der der Druck des genannten Schmiermittels in der genannten Fluidkammer unterhalb des Atmosphärendruckes gehalten wird.

6. Mechanische Dichtungsvorrichtung nach Anspruch 2, bei der der Druck des genannten Schmiermittels in der genannten Fluidkammer unterhalb des Atmosphärendruckes gehalten wird.

7. Mechanische Dichtungsvorrichtung nach Anspruch 1, bei der der genannte feste Teil einen Balg aufweist, der nachgiebig auf den genannten drehbaren Dichtring drückt und eine Dichtung für den Verbindungsbereich mit dem drehbaren Dichtring bildet, wobei der genannte feste Teil sicher von einer Hülse gehalten ist, die in einem Passeingriff mit der genannten drehbaren Welle steht.

8. Mechanische Dichtungsvorrichtung nach Anspruch 2, bei der der genannte feste Teil einen Balg aufweist, der nachgiebig auf den genannten drehbaren Dichtring drückt und eine Dichtung für den Verbindungsbereich mit dem drehbaren Dichtring bildet, wobei der genannte feste Teil sicher von einer Hülse gehalten ist, die in einem Passeingriff mit der genannten drehbaren Welle steht.

## Revendications

1. Dispositif de joint d'étanchéité mécanique pour sceller étanchement un fluide de fonctionnement à un espace de jeu formé entre un boîtier de joint d'étanchéité et un arbre rotatif, ledit dispositif de joint d'étanchéité mécanique comprenant :
a) une bague d'étanchéité fixe (20) fixée à un capot de joint d'étanchéité (70) dudit boîtier de joint d'étanchéité (60) dans une relation d'étanchéité, et comportant une face d'étanchéité (24) ;
b) une bague d'étanchéité rotative (3) comportant une face d'étanchéité opposée (4), ladite face d'étanchéité opposée étant susceptible de s'opposer à ladite face d'étanchéité dans une relation de contact d'étanchéité ;
c) une partie fixe (10) maintenant ladite bague d'étanchéité rotative dans une relation d'étanchéité, et maintenue par ledit arbre rotatif dans une relation d'étanchéité et tournant avec ledit arbre rotatif en une relation intégrée ;
d) un élément d'étanchéité (45) qui est disposé sur un côté de section extérieure du dispositif éloigné des surfaces de contact d'étanchéité étroite de ladite face d'étanchéité et de ladite face d'étanchéité opposée, et constituant un joint d'étanchéité entre ledit capot de joint d'étanchéité et ledit arbre rotatif ;
e) une chambre de fluide (D) retenant le lubrifiant formée entre les surfaces de contact d'étanchéité étroite de ladite face d'étanchéité et de ladite face d'étanchéité opposée et dudit élément d'étanchéité ; et
f) un orifice de délivrance (75) délivrant ledit lubrifiant à ladite chambre de fluide,
**caractérisé en ce qu'**une surface de région de lubrification (4B) est disposée dans le côté de chambre de fluide de ladite face d'étanchéité ou de ladite face d'étanchéité opposée, **en ce qu'**une surface de région d'auto-lubrification (4A) est disposée dans ledit côté de section intérieure (L) du dispositif, **en ce qu'**un orifice d'introduction (5B) est disposé dans ladite surface de région de lubrification (4B) de façon à introduire ledit lubrifiant, **en ce que** des rainures d'arrêt (5A) sous une forme annulaire sont disposées dans ladite surface de région d'auto-lubrification (4A), et **en ce que** lesdites rainures d'arrêt (5A) arrêtent ledit lubrifiant à partir de ladite surface de région de lubrification (4B).

2. Dispositif de joint d'étanchéité mécanique selon la revendication 1, dans lequel :
ladite bague d'étanchéité rotative ou ladite bague d'étanchéité fixe est réalisée en carbone dense de haute résistance.

3. Dispositif de joint d'étanchéité mécanique selon la revendication 1, dans lequel :
la pression dudit lubrifiant dans ladite chambre de fluide est maintenue inférieure à la pression dans ladite section intérieure du dispositif.

4. Dispositif de joint d'étanchéité mécanique selon la revendication 2, dans lequel :
la pression dudit lubrifiant dans ladite chambre de fluide est maintenue inférieure à la pression dans ladite section intérieure du dispositif.

5. Dispositif de joint d'étanchéité mécanique selon la revendication 1, dans lequel :
la pression dudit lubrifiant dans ladite chambre de fluide est maintenue en dessous de la pression atmosphérique.

6. Dispositif de joint d'étanchéité mécanique selon la revendication 2, dans lequel :
la pression dudit lubrifiant dans ladite chambre de fluide est maintenue en dessous de la pression atmosphérique.

7. Dispositif de joint d'étanchéité mécanique selon la revendication 1, dans lequel ladite partie fixe applique un soufflet qui pousse élastiquement ladite bague d'étanchéité rotative et qui constitue un joint d'étanchéité pour la section de joint avec ladite bague d'étanchéité rotative, ladite partie fixe étant fermement maintenue par un manchon qui se trouve en prise par adaptation avec ledit arbre rotatif.

8. Dispositif de joint d'étanchéité mécanique selon la revendication 2, dans lequel ladite partie fixe applique un soufflet qui pousse élastiquement ladite bague d'étanchéité rotative et qui constitue un joint d'étanchéité pour la section de joint avec ladite bague d'étanchéité rotative, ladite partie fixe étant fermement maintenue par un manchon qui se trouve en prise par adaptation avec ledit arbre rotatif.
